# EUROPÄISCHE PATENTSCHRIFT

(11) **EP 3 084 040 B1**
(45) Veröffentlichungstag und Bekanntmachung des Hinweises auf die Patenterteilung: **27.09.2017**
(21) Anmeldenummer: 14823936.1
(22) Anmeldetag: 16.12.2014
(51) Int. Cl.: C25B 15/02, C25B 1/46, C25B 9/08, C25B 9/18

(54) **VORRICHTUNG UND VERFAHREN ZUM FLEXIBLEN EINSATZ VON STROM**
DEVICE AND METHOD FOR THE FLEXIBLE USE OF ELECTRICITY
DISPOSITIF ET PROCÉDÉ PERMETTANT L'UTILISATION FLEXIBLE D'UN COURANT

(30) Priorität: 18.12.2013 DE 102013226414
(43) Veröffentlichungstag der Anmeldung: 26.10.2016
(73) Patentinhaber: Evonik Degussa GmbH, 45128 Essen (DE)
(72) Erfinder: MOUSSALLEM, Imad, 63457 Hanau (DE); MARKOWZ, Georg, 63755 Alzenau (DE)
(86) Internationale Anmeldenummer: PCT/EP2014/077870
(87) Internationale Veröffentlichungsnummer: WO 2015/091422

(56) Entgegenhaltungen:
- US-A- 4 364 806
- US-A- 4 808 290

## Beschreibung

Die vorliegende Erfindung betrifft eine Vorrichtung und ein Verfahren zum flexiblen Einsatz von Strom, mit denen überschüssige elektrische Energie zur Herstellung von Wasserstoff genutzt werden kann.

Der Einsatz erneuerbarer Energien, wie Windenergie und Solarenergie, gewinnt eine immer größere Bedeutung zur Stromerzeugung. Elektrische Energie wird typischerweise über langreichweitige, überregionale und länderübergreifend gekoppelte Stromversorgungsnetze, kurz als Stromnetze bezeichnet, an eine Vielzahl von Verbrauchern geliefert. Da elektrische Energie im Stromnetz selbst nicht in signifikantem Umfang speicherbar ist, muss die in das Stromnetz eingespeiste elektrische Leistung auf den verbraucherseitigen Leistungsbedarf, die sogenannte Last, abgestimmt werden. Die Last schwankt bekanntermaßen zeitabhängig, insbesondere je nach Tageszeit, Wochentag oder auch Jahreszeit. Für eine stabile und zuverlässige Stromversorgung ist ein kontinuierlicher Gleichlauf von Stromerzeugung und Stromabnahme notwendig. Eventuell auftretende kurzfristige Abweichungen werden durch sogenannte positive oder negative Regelenergie bzw. Regelleistung ausgeglichen. Bei regenerativen Stromerzeugungseinrichtungen tritt die Schwierigkeit auf, dass bei bestimmten Typen, wie Windenergie und Solarenergie, die Energieerzeugungsleistung nicht zu jedem Zeitpunkt vorhanden und in bestimmter Weise steuerbar ist, sondern tageszeitlichen und witterungsbedingten Schwankungen unterliegt, die nur bedingt vorhersagbar sind und in der Regel nicht mit dem jeweils aktuellen Energiebedarf übereinstimmen.

Die Differenz zwischen der Erzeugungsleistung aus fluktuierenden erneuerbaren Energien und dem aktuellen Verbrauch wird üblicherweise durch andere Kraftwerke bereitgestellt, wie beispielsweise Gas-, Kohle- und Kernkraftwerke. Mit zunehmendem Ausbau und Anteil der fluktuierenden erneuerbaren Energien an der Stromversorgung müssen immer größere Schwankungen zwischen deren Leistung und dem aktuellen Verbrauch ausgeglichen werden. So werden bereits heute neben Gaskraftwerken zunehmend auch Steinkohlekraftwerke in Teillast gefahren oder ganz heruntergefahren, um die Schwankungen auszugleichen. Da diese variable Fahrweise der Kraftwerke mit beträchtlichen Zusatzkosten verbunden ist, wird seit geraumer Zeit die Entwicklung alternativer Maßnahmen untersucht.

Ein bekannter Ansatz ist es, bei einem Überschuss an elektrischer Energie alternativ oder ergänzend zur Veränderung der Leistung eines Kraftwerks überschüssige elektrische Energie zur Herstellung von Wasserstoff durch elektrolytische Spaltung von Wasser zu nutzen. Dieser Ansatz hat den Nachteil, dass eine separate Vorrichtung zur elektrolytischen Spaltung von Wasser errichtet werden muss, die nur bei einem Überschuss an elektrischer Energie betrieben wird und die meiste Zeit ungenutzt bleibt.

Die Produktion von Chlor durch Chlor-Alkali-Elektrolyse einer Natriumchloridlösung ist einer der industriellen Prozesse mit dem höchsten Stromverbrauch. Für die Chlor-Alkali-Elektrolyse werden technisch Anlagen mit einer größeren Zahl an parallel betriebenen Elektrolysezellen eingesetzt. Neben Chlor werden dabei üblicherweise als Koppelprodukte Natronlauge und Wasserstoff erzeugt. Um den Stromverbrauch der Chlor-Alkali-Elektrolyse zu verringern wurden alternative Verfahren entwickelt, in denen an der Kathode der Elektrolysezelle nicht Protonen zu molekularem Wasserstoff reduziert werden, sondern stattdessen an einer Sauerstoffverzehrelektrode molekularer Sauerstoff zu Wasser reduziert wird. Die aus dem Stand der Technik bekannten Anlagen zur Chlor-Alkali-Elektrolyse mit Sauerstoffverzehrelektroden sind nicht für eine Erzeugung von molekularem Wasserstoff ausgelegt.

Es wurde bereits vorgeschlagen, für einen flexiblen Einsatz von Strom eine Chlor-Alkali-Elektrolyse so zu betreiben, dass in Abhängigkeit vom Stromangebot eine unterschiedliche Zahl an Elektrolysezellen betrieben wird. Dieser Ansatz hat den Nachteil, dass die produzierte Menge an Chlor mit dem Stromangebot schwankt und nicht dem aktuellen Bedarf an Chlor entspricht, so dass für einen solchen Betrieb einer Chlor-Alkali-Elektrolyse ein großer Zwischenspeicher für Chlor erforderlich wird. Eine Zwischenlagerung großer Mengen des Gefahrstoffs Chlor ist jedoch aus Sicherheitsgründen unerwünscht.

Es wurde nun gefunden, dass sich die Nachteile der oben genannten Vorrichtungen und Verfahren vermeiden lassen, wenn in einer Elektrolysezelle zur Chlor-Alkali-Elektrolyse in der Kathodenhalbzelle sowohl eine Sauerstoffverzehrelektrode als Kathode als auch eine zweite Kathode zur Erzeugung von Wasserstoff angeordnet werden und die Kathodenhalbzelle mit einer Leitung zum Spülen des an die Sauerstoffverzehrelektrode angrenzenden Gasraums ausgestattet wird, so dass die Elektrolysezelle in Abhängigkeit vom Stromangebot wahlweise mit Erzeugung von Wasserstoff an der zweiten Kathode oder mit Reduktion von Sauerstoff an der Sauerstoffverzehrelektrode betrieben werden kann.

Gegenstand der Erfindung ist eine Vorrichtung zum flexiblen Einsatz von Strom, umfassend eine Elektrolysezelle zur Chlor-Alkali-Elektrolyse mit einer Anodenhalbzelle, einer Kathodenhalbzelle und einer die Anodenhalbzelle und die Kathodenhalbzelle voneinander trennenden Kationenaustauschermembran, eine in der Anodenhalbzelle angeordnete Anode zur Entwicklung von Chlor, eine in der Kathodenhalbzelle als Kathode angeordnete Sauerstoffverzehrelektrode, einen zwischen der Kationenaustauschermembran und der Sauerstoffverzehrelektrode gebildeten und von Elektrolyt durchströmten Katholytraum, einen an die Sauerstoffverzehrelektrode auf einer dem Katholytraum abgewandten Oberfläche angrenzenden Gasraum und eine Leitung zur Zufuhr von gasförmigem Sauerstoff in diesen Gasraum, dadurch gekennzeichnet, dass im Katholytraum eine zweite Kathode zur Erzeugung von Wasserstoff angeordnet ist und die Vorrichtung mindestens eine Leitung zum Spülen des Gasraums mit Inertgas aufweist.

Gegenstand der Erfindung ist außerdem ein Verfahren zum flexiblen Einsatz von Strom, bei dem in einer erfindungsgemäßen Vorrichtung Chlor durch Chlor-Alkali-Elektrolyse hergestellt wird, wobei bei einem niedrigen Stromangebot der Sauerstoffverzehrelektrode gasförmiger Sauerstoff zugeführt wird und bei einer ersten Zellspannung an der Sauerstoffverzehrelektrode Sauerstoff reduziert wird und bei einem hohen Stromangebot der Sauerstoffverzehrelektrode kein Sauerstoff zugeführt wird und bei einer zweiten Zellspannung, die höher als die erste Zellspannung ist, an der zweiten Kathode Wasserstoff erzeugt wird.

Die erfindungsgemäße Vorrichtung umfasst eine Elektrolysezelle zur Chlor-Alkali-Elektrolyse mit einer Anodenhalbzelle, einer Kathodenhalbzelle und einer die Anodenhalbzelle und die Kathodenhalbzelle voneinander trennenden Kationenaustauschermembran. Die erfindungsgemäße Vorrichtung kann dabei mehrere solcher Elektrolysezellen umfassen, die zu monopolaren oder bipolaren Elektrolyseuren verbunden sein können, wobei monopolare Elektrolyseure bevorzugt sind.

In der Anodenhalbzelle der erfindungsgemäßen Vorrichtung ist eine Anode zur Entwicklung von Chlor angeordnet. Als Anode können alle aus dem Stand der Technik bekannten Anoden zur Chlor-Alkali-Elektrolyse nach dem Membranverfahren eingesetzt werden. Vorzugsweise werden dimensionsstabile Elektroden mit einem Träger aus metallischem Titan und einer Beschichtung mit einem Mischoxid aus Titanoxid und Rutheniumoxid oder Iridiumoxid verwendet.

Anodenhalbzelle und Kathodenhalbzelle der erfindungsgemäßen Vorrichtung sind durch eine Kationenaustauschermembran voneinander getrennt. Als Kationenaustauschermembran können alle zur Chlor-Alkali-Elektrolyse nach dem Membranverfahren als geeignet bekannten Kationenaustauschermembranen eingesetzt werden. Geeignete Kationenaustauschermembranen sind unter den Handelsnamen Nafion®, Aciplex™ und Flemion™ von Du Pont, Asahi Kasei und Asahi Glass erhältlich.

In der Kathodenhalbzelle der erfindungsgemäßen Vorrichtung ist eine Sauerstoffverzehrelektrode als Kathode so angeordnet, dass die Kathodenhalbzelle zwischen der Kationenaustauschermembran und der Sauerstoffverzehrelektrode einen von Elektrolyt durchströmten Katholytraum aufweist und an die Sauerstoffverzehrelektrode auf einer dem Katholytraum abgewandten Oberfläche ein Gasraum angrenzt, dem Sauerstoff über eine Leitung zur Zufuhr von gasförmigem Sauerstoff zugeführt werden kann. Die Vorrichtung weist außerdem mindestens eine Leitung zum Spülen des Gasraums mit einem Inertgas auf. Der Gasraum kann über die gesamte Höhe der Kathodenhalbzelle durchgehend sein oder in mehrere vertikal übereinander angeordnete Gastaschen unterteilt sein, wobei die Gastaschen jeweils Öffnungen zum Druckausgleich mit dem Elektrolytraum aufweisen. Geeignete Ausführungsformen für solche Gastaschen sind dem Fachmann bekannt, beispielsweise aus DE 44 44 114 A1. Die Leitung zum Spülen des Gasraums mit einem Inertgas kann getrennt von der Leitung zur Zufuhr von gasförmigem Sauerstoff in den Gasraum angeordnet sein oder sie kann außerhalb der Kathodenhalbzelle mit der Leitung zur Zufuhr von gasförmigem Sauerstoff verbunden sein, so dass der Leitungsabschnitt zwischen dieser Verbindung und der Kathodenhalbzelle mit Inertgas gespült werden kann.

Als Sauerstoffverzehrelektrode können edelmetallhaltige Gasdiffusionselektroden eingesetzt werden. Vorzugsweise werden silberhaltige Gasdiffusionselektroden verwendet, besonders bevorzugt Gasdiffusionselektroden mit einer porösen hydrophoben Gasdiffusionsschicht, die metallisches Silber und ein hydrophobes Polymer enthält. Das hydrophobe Polymer ist vorzugsweise ein fluoriertes Polymer, besonders bevorzugt Polytetrafluorethylen. Besonders bevorzugt besteht die Gasdiffusionsschicht im Wesentlichen aus mit Polytetrafluorethylen gesinterten Silberpartikeln. Die Gasdiffusionselektrode kann zusätzlich eine netzförmige oder gitterförmige Trägerstruktur umfassen, die vorzugsweise elektrisch leitfähig ist und besonders bevorzugt aus Nickel besteht. Besonders geeignete mehrlagige Sauerstoffverzehrelektroden sind aus EP 2 397 578 A2 bekannt. Die aus EP 2 397 578 A2 bekannten mehrlagigen Sauerstoffverzehrelektroden können mit hohen Differenzdrücken betrieben werden und lassen sich deshalb in einer Kathodenhalbzelle mit einem über die gesamte Höhe durchgehenden Gasraum einsetzen.

In der Kathodenhalbzelle der erfindungsgemäßen Vorrichtung ist außerdem im Katholytraum eine zweite Kathode zur Erzeugung von Wasserstoff angeordnet. Als zweite Kathode können prinzipiell alle aus dem Stand der Technik für die Erzeugung von Wasserstoff in einer Chlor-Alkali-Elektrolyse bekannten Kathoden verwendet werden. Vorzugsweise wird als zweite Kathode eine Kathode mit einer edelmetallhaltigen Beschichtung verwendet, die vorzugsweise Platin oder Ruthenium als Edelmetall enthält. Vorzugsweise ist die zweite Kathode netzförmig oder gitterförmig gestaltet und liegt unmittelbar auf der Kationenaustauschermembran auf, so dass der Elektrolyt den Katholytraum im Wesentlichen zwischen der zweiten Kathode und der Sauerstoffverzehrelektrode durchströmt.

Die Sauerstoffverzehrelektrode und die zweite Kathode sind in der Kathodenhalbzelle vorzugsweise voneinander elektrisch isoliert und weisen vorzugsweise voneinander getrennte Stromanschlüsse auf. Dadurch lässt sich zuverlässig vermeiden, dass es während des Betriebs der Vorrichtung mit Reduzieren von Sauerstoff an der Sauerstoffverzehrelektrode zu einer Bildung von Wasserstoff an der zweiten Kathode kommt.

Die erfindungsgemäße Vorrichtung umfasst vorzugsweise eine Leitung, mit der sich Inertgas aus dem Gasraum der Kathodenhalbzelle abführen lässt und an der ein Sensor angeordnet ist, mit dem sich der Gehalt an Sauerstoff im Inertgas messen lässt. Durch die Verwendung eines solchen Sensors lässt sich überwachen, ob bei einem Wechsel von einem Betrieb der Vorrichtung mit Reduzieren von Sauerstoff an der Sauerstoffverzehrelektrode zu einem Betrieb mit einer Bildung von Wasserstoff an der zweiten Kathode der Gasraum ausreichend mit Inertgas gespült ist, um die Bildung einer zündfähigen Gasmischung im Gasraum zu vermeiden.

In einer bevorzugten Ausführungsform umfasst die erfindungsgemäße Vorrichtung zusätzlich mindestens eine Leitung zum Spülen des Katholytraums mit Inertgas. Die Vorrichtung kann dabei eine weitere Leitung umfassen, mit der sich Inertgas aus dem Katholytraum abführen lässt, wobei diese Leitung mit einem Gassammler am oberen Ende des Katholytraums verbunden sein kann oder mit einer außerhalb der Kathodenhalbzelle angeordneten Trennvorrichtung verbunden sein kann, in der Gas von aus der Kathodenhalbzelle ausströmendem Elektrolyt abgetrennt wird. Besonders bevorzugt umfasst die Vorrichtung eine Leitung, mit der sich Inertgas sowohl aus dem Gasraum als auch aus dem Katholytraum der Kathodenhalbzelle abführen lässt und an der ein oder mehrere Sensoren angeordnet sind, mit denen sich der Gehalt an Sauerstoff und an Wasserstoff im Inertgas messen lässt.

Der an die Sauerstoffverzehrelektrode angrenzende Gasraum, gegebenenfalls vorhandene Gastaschen, ein gegebenenfalls vorhandener Gassammler und die mit der Kathodenhalbzelle verbundenen Leitungen zur Zufuhr und Abfuhr von Gasen werden vorzugsweise so ausgeführt, dass bei einem Spülen des Gasraums und gegebenenfalls des Katholytraums mit Inertgas nur eine geringe Rückvermischung von Gas auftritt. Der Gasraum, gegebenenfalls vorhandene Gastaschen und ein gegebenenfalls vorhandener Gassammler werden deshalb mit möglichst geringen Gasvolumina ausgeführt.

In einer bevorzugten Ausführungsform umfasst die erfindungsgemäße Vorrichtung mehrere parallel angeordnete Elektrolyseure. Dabei umfasst jeder der Elektrolyseure mehrere Elektrolysezellen mit jeweils einem Gasraum, sowie eine gemeinsame Leitung zur Zufuhr von gasförmigem Sauerstoff in die Gasräume der Elektrolysezellen des Elektrolyseurs und eine gemeinsame Leitung zum Spülen der Gasräume des Elektrolyseurs mit Inertgas. Außerdem umfasst die Vorrichtung voneinander getrennte Leitungen zur Zufuhr von Sauerstoff zu den Elektrolyseuren und getrennte Leitungen zur Zufuhr von Inertgas zu den Elektrolyseuren. Eine solche Ausführung der Vorrichtung ermöglicht mit einem geringen apparativen Aufwand einen Betrieb der Vorrichtung, bei dem der Anteil an Elektrolysezellen, in denen Wasserstoff erzeugt wird, variiert werden kann.

Die erfindungsgemäße Vorrichtung kann zusätzlich einen Pufferspeicher für in der Anodenhalbzelle erzeugtes Chlor aufweisen, in dem sich eine Menge an Chlor speichern lässt, mit der sich die beim Spülen der Kathodenhalbzelle mit Inertgas eintretende Unterbrechung der Chlorerzeugung in der Anodenhalbzelle ausgleichen lässt.

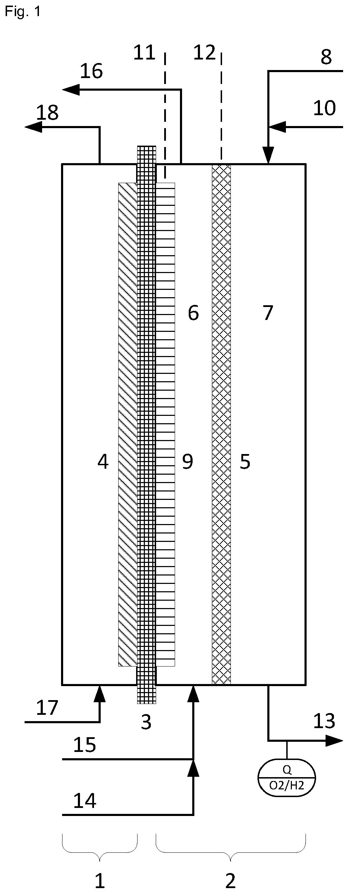

Fig. 1 zeigt eine bevorzugte Ausführungsform der erfindungsgemäßen Vorrichtung mit einer Elektrolysezelle, bei der die zweite Kathode auf der Kationenaustauschermembran aufliegt. Die Elektrolysezelle umfasst eine Anodenhalbzelle (1), eine Kathodenhalbzelle (2) und eine die beiden Halbzellen trennende Kationenaustauschermembran (3). In der Anodenhalbzelle ist eine Anode (4) zur Entwicklung von Chlor angeordnet, die auf der Kationenaustauschermembran aufliegt. In der Kathodenhalbzelle ist eine Sauerstoffverzehrelektrode (5) als Kathode angeordnet, die die Kathodenhalbzelle in einen zwischen der Kationenaustauschermembran und der Sauerstoffverzehrelektrode gebildeten Katholytraum (6) und einen Gasraum (7) unterteilt. Über eine Leitung (8) kann dem Gasraum gasförmiger Sauerstoff zugeführt werden. Über eine Leitung (10) kann der Gasraum mit Inertgas gespült werden. Über eine Leitung (13) lässt sich Inertgas aus dem Gasraum abführen, wobei an der Leitung (13) ein Sensor angeordnet ist, mit dem sich der Gehalt an Sauerstoff und Wasserstoff im Inertgas messen lässt. Im Katholytraum (6) ist eine zweite Kathode (9) zur Erzeugung von Wasserstoff angeordnet, die auf der Kationenaustauschermembran aufliegt. Die Sauerstoffverzehrelektrode (5) und die zweite Kathode (9) weisen voneinander getrennte Stromanschlüsse (11, 12) auf. Dem Katholytraum (6) wird über eine Leitung (15) eine Natriumhydroxidlösung zugeführt und über eine Leitung (16) eine angereicherte Natriumhydroxidlösung, gegebenenfalls zusammen mit gebildetem Wasserstoff, entnommen, so dass der Katholytraum von Elektrolyt durchströmt wird. Über eine Leitung (14) kann der Katholytraum mit Inertgas gespült werden. Der Anodenhalbzelle (1) wird über eine Leitung (17) eine Natriumchloridlösung zugeführt und über eine Leitung (18) eine abgereicherte Natriumchloridlösung zusammen mit Chlor entnommen.

Bei dem erfindungsgemäßen Verfahren zum flexiblen Einsatz von Strom wird in einer erfindungsgemäßen Vorrichtung Chlor durch Chlor-Alkali-Elektrolyse hergestellt und mindestens eine Elektrolysezelle der Vorrichtung in Abhängigkeit vom Stromangebot mit unterschiedlichen Zellspannungen betrieben. Bei einem niedrigen Stromangebot wird der Sauerstoffverzehrelektrode der Elektrolysezelle gasförmiger Sauerstoff zugeführt und bei einer ersten Zellspannung wird an der Sauerstoffverzehrelektrode Sauerstoff reduziert. Bei einem hohen Stromangebot wird der Sauerstoffverzehrelektrode kein Sauerstoff zugeführt und bei einer zweiten Zellspannung, die höher als die erste Zellspannung ist, wird an der zweiten Kathode Wasserstoff erzeugt.

Vorzugsweise wird im erfindungsgemäßen Verfahren die bevorzugte Ausführungsform der Vorrichtung verwendet, bei der die Sauerstoffverzehrelektrode und die zweite Kathode voneinander getrennte Stromanschlüsse aufweisen und es wird bei dem Betrieb mit der ersten Zellspannung die Zellspannung nur an der Sauerstoffverzehrelektrode angelegt und bei dem Betrieb mit der zweiten Zellspannung die Zellspannung nur an die zweite Kathode angelegt.

Ein hohes Stromangebot kann sich aus einem Stromüberschuss und ein niedriges Stromangebot kann sich aus einem Stromunterschuss ergeben. Ein Stromüberschuss ergibt sich, wenn zu einem Zeitpunkt mehr Strom aus erneuerbaren Energien bereitgestellt wird als zu diesem Zeitpunkt insgesamt an Strom verbraucht wird. Ein Stromüberschuss ergibt sich auch, wenn große Mengen an elektrischer Energie aus fluktuierenden erneuerbaren Energien bereitgestellt werden und das Drosseln oder Abschalten von Kraftwerken mit hohen Kosten verbunden ist. Ein Stromunterschuss ergibt sich, wenn vergleichsweise geringe Mengen an erneuerbaren Energien zur Verfügung stehen und ineffiziente oder mit hohen Kosten verbundene Kraftwerke betrieben werden müssen. Ein Stromüberschuss kann auch vorliegen, wenn der Betreiber eines Stromerzeugers, zum Beispiel eines Windparks, mehr Leistung produziert als er prognostiziert und verkauft hat. Analog kann ein Stromunterschuss vorliegen, wenn er weniger Leistung produziert als er prognostiziert hat. Die Unterscheidung zwischen einem hohen Stromangebot und einem niedrigen Stromangebot kann alternativ auch auf Basis eines Preises an einer Strombörse getroffen werden, wobei ein niedriger Strompreis einem hohen Stromangebot entspricht und ein hoher Strompreis einem niedrigen Stromangebot entspricht. In diesem Fall kann für die Unterscheidung zwischen einem hohen Stromangebot und einem niedrigen Stromangebot ein fester oder ein zeitlich variabler Schwellwert für den Strompreis an einer Strombörse verwendet werden.

In einer bevorzugten Ausführungsform wird für das erfindungsgemäße Verfahren ein Schwellwert für ein Stromangebot festgelegt. Dann wird in regelmäßigen oder unregelmäßigen Abständen das aktuelle Stromangebot ermittelt und die Elektrolysezelle wird mit der ersten Zellspannung unter Zufuhr von gasförmigem Sauerstoff zur Sauerstoffverzehrelektrode betrieben, wenn das Stromangebot unter dem Schwellwert liegt, und mit der zweiten Zellspannung ohne Zufuhr von Sauerstoff zur Sauerstoffverzehrelektrode betrieben, wenn das Stromangebot über dem Schwellwert liegt. Der Schwellwert für das Stromangebot und das aktuelle Stromangebot kann, wie oben beschrieben, auf Basis der Differenz zwischen einer Stromerzeugung und einem Stromverbrauch, auf Basis der aktuellen Leistung eines Stromerzeugers oder auf Basis des Strompreises an einer Strombörse festgelegt beziehungsweise ermittelt werden.

Durch den Wechsel zwischen zwei Betriebsweisen mit unterschiedlicher Zellspannung kann bei dem erfindungsgemäßen Verfahren der Stromverbrauch der Chlor-Alkali-Elektrolyse flexibel an das Stromangebot angepasst werden, ohne dass dazu die Produktionsleistung an Chlor verändert und Chlor zwischengelagert werden muss. Die durch die höhere zweite Zellspannung zusätzlich verbrauchte elektrische Energie wird zur Erzeugung von Wasserstoff verwendet und ermöglicht eine Speicherung von überschüssigem Strom in Form von chemischer Energie ohne die Errichtung und den Betrieb zusätzlicher Anlagen für die Stromspeicherung. Dabei wird mehr Wasserstoff je zusätzlich verbrauchter kWh erzeugt als bei einer Wasserstofferzeugung durch Wasserelektrolyse. Durch die Verwendung von zwei unterschiedlichen Kathoden für die beiden Betriebsweisen, die auf die jeweilige Betriebsweise optimiert werden können, kann in beiden Betriebsweisen mit geringen Überspannungen gearbeitet werden und der Stromverbrauch in beiden Betriebsweisen gering gehalten werden.

Geeignete Werte für die erste Zellspannung zur Reduktion von Sauerstoff an der Sauerstoffverzehrelektrode und für die zweite Zellspannung zur Herstellung von Wasserstoff an der zweiten Kathode hängen von der Bauweise der eingesetzten Sauerstoffverzehrelektrode und der zweiten Kathode und von der für die Chlor-Alkali-Elektrolyse vorgesehenen Stromdichte ab und können in bekannter Weise durch die Messung von Strom-Spannungs-Kurven für beide Betriebsweisen ermittelt werden.

Der gasförmige Sauerstoff kann in Form von im Wesentlichen reinem Sauerstoff oder in Form eines sauerstoffreichen Gases zugeführt werden, wobei das sauerstoffreiche Gas vorzugsweise mehr als 50 Vol.-% Sauerstoff und besonders bevorzugt mehr als 80 Vol.-% Sauerstoff enthält. Vorzugsweise besteht das sauerstoffreiche Gas im Wesentlichen aus Sauerstoff und Stickstoff und kann optional zusätzlich Argon enthalten. Ein geeignetes sauerstoffreiches Gas kann durch bekannte Verfahren aus Luft erhalten werden, beispielsweise durch Druckwechseladsorption oder eine Membrantrennung.

Vorzugsweise wird bei einem Wechsel von Wasserstofferzeugung bei der zweiten Zellspannung zu Sauerstoffreduktion bei der ersten Zellspannung die Zellspannung verringert, bis im Wesentlichen kein Strom mehr fließt, und der Gasraum wird mit einem Inertgas gespült, bevor der Sauerstoffverzehrelektrode gasförmiger Sauerstoff zugeführt wird. Analog wird vorzugsweise bei einem Wechsel von Sauerstoffreduktion bei der ersten Zellspannung zu Wasserstofferzeugung bei der zweiten Zellspannung die Zellspannung verringert, bis im Wesentlichen kein Strom mehr fließt, und der Gasraum wird mit einem Inertgas gespült, bevor an der zweiten Kathode Wasserstoff erzeugt wird. Als Inertgas eignen sich alle Gase, die weder mit Sauerstoff noch mit Wasserstoff zündfähige Gemische bilden und die nicht mit wässriger Natronlauge reagieren. Vorzugsweise wird als Inertgas Stickstoff verwendet. Vorzugsweise wird so lange mit Inertgas gespült und die Zellspannung verringert gehalten, bis der Gehalt an Wasserstoff oder Sauerstoff in dem Gas, das auf Grund des Spülens die Kathodenhalbzelle verlässt, unter einen festgesetzten Grenzwert fällt. Der Grenzwert für Wasserstoff wird vorzugsweise so gewählt, dass sich durch Mischen des wasserstoffhaltigen Gases mit reinem Sauerstoff kein zündfähiges Gemisch ergeben kann und der Grenzwert für Sauerstoff wird vorzugsweise so gewählt, dass sich durch Mischen des sauerstoffhaltigen Gases mit reinem Wasserstoff kein zündfähiges Gemisch ergeben kann. Geeignete Grenzwerte können aus bekannten Diagrammen für die Zündfähigkeit von Gasgemischen entnommen oder durch dem Fachmann bekannte Verfahren zur Bestimmung der Zündfähigkeit ermittelt werden. Durch das Verringern der Zellspannung und das Spülen mit Inertgas lässt sich die Bildung von zündfähigen Gasgemischen bei einem Wechsel zwischen den beiden Betriebsweisen des erfindungsgemäßen Verfahrens sicher vermeiden.

Bei einem Wechsel von Wasserstofferzeugung bei der zweiten Zellspannung zu Sauerstoffreduktion bei der ersten Zellspannung wird nach dem Spülen mit Inertgas vorzugsweise der Gasraum zusätzlich noch mit sauerstoffhaltigem Gas gespült, um bei der Sauerstoffreduktion eine Stofftransporthemmung durch einen hohen Gehalt an Inertgas in der Gasdiffusionsschicht der Sauerstoffverzehrelektrode zu vermeiden.

Vorzugsweise wird für das erfindungsgemäße Verfahren eine Prognose des erwarteten Stromangebots erstellt, sowie eine Mindestdauer für den Betrieb mit der ersten und mit der zweiten Zellspannung vorgegeben und ein Wechsel zwischen einem Betrieb mit der ersten Zellspannung unter Zufuhr von gasförmigem Sauerstoff zu einem Betrieb mit der zweiten Zellspannung ohne Zufuhr von Sauerstoff nur vorgenommen, wenn die prognostizierte Dauer eines niedrigen oder eines hohen Stromangebots länger ist als die vorgegebene Mindestdauer. Durch eine solche Vorgehensweise können Einbußen an Produktionskapazität für Chlor durch zu häufige Wechsel der Zellspannung und damit verbundene Unterbrechungen der Chlorproduktion während dem Spülen mit Inertgas vermieden werden.

In einer bevorzugten Ausführungsform des erfindungsgemäßen Verfahrens wird nach einem Wechsel von Sauerstoffreduktion bei der ersten Zellspannung zu Wasserstofferzeugung bei der zweiten Zellspannung der Kathodenhalbzelle eine Wasserstoff und Inertgas enthaltende Gasmischung entnommen und aus dieser Gasmischung Wasserstoff abgetrennt, vorzugsweise durch eine Membran. Durch eine solche Abtrennung lässt sich praktisch der gesamte erzeugte Wasserstoff in hoher Reinheit und mit gleichbleibender Qualität erhalten.

Vorzugsweise wird das erfindungsgemäße Verfahren in einer Vorrichtung durchgeführt, die mehrere erfindungsgemäße Elektrolysezellen aufweist und der Anteil der Elektrolysezellen, denen kein Sauerstoff zugeführt wird und in denen an der zweiten Kathode Wasserstoff erzeugt wird, wird in Abhängigkeit vom Stromangebot verändert. Besonders bevorzugt wird dazu die weiter oben beschriebene Vorrichtung mit mehreren parallel angeordneten Elektrolyseuren eingesetzt und der Anteil der Elektrolyseure, denen kein Sauerstoff zugeführt wird und in denen an der zweiten Kathode Wasserstoff erzeugt wird, wird in Abhängigkeit vom Stromangebot verändert. Dies ermöglicht eine gezielte Einstellung des Stromverbrauchs der Chlor-Alkali-Elektrolyse in einem weiten Bereich bei im Wesentlichen gleichbleibender Chlorproduktion. In dieser Ausführungsform kann das erfindungsgemäße Verfahren ohne nachteilige Auswirkungen auf die Chlorproduktion zur Bereitstellung von negativer Regelenergie für den Betrieb eines Stromverteilungsnetzes eingesetzt werden.

## Patentansprüche

1. Vorrichtung zum flexiblen Einsatz von Strom, umfassend eine Elektrolysezelle zur Chlor-Alkali-Elektrolyse mit einer Anodenhalbzelle, einer Kathodenhalbzelle und einer die Anodenhalbzelle und die Kathodenhalbzelle voneinander trennenden Kationenaustauschermembran, eine in der Anodenhalbzelle angeordnete Anode zur Entwicklung von Chlor, eine in der Kathodenhalbzelle als Kathode angeordnete Sauerstoffverzehrelektrode, einen zwischen der Kationenaustauschermembran und der Sauerstoffverzehrelektrode gebildeten und von Elektrolyt durchströmten Katholytraum, einen an die Sauerstoffverzehrelektrode auf einer dem Katholytraum abgewandten Oberfläche angrenzenden Gasraum und eine Leitung zur Zufuhr von gasförmigem Sauerstoff in diesen Gasraum, **dadurch gekennzeichnet, dass** im Katholytraum eine zweite Kathode zur Erzeugung von Wasserstoff angeordnet ist und die Vorrichtung mindestens eine Leitung zum Spülen des Gasraums mit Inertgas aufweist.

2. Vorrichtung nach Anspruch 1, **dadurch gekennzeichnet, dass** die Sauerstoffverzehrelektrode und die zweite Kathode voneinander getrennte Stromanschlüsse aufweisen.

3. Vorrichtung nach Anspruch 1 oder 2, **dadurch gekennzeichnet, dass** sie eine Leitung umfasst, mit der sich Inertgas aus dem Gasraum abführen lässt und an dieser Leitung ein Sensor angeordnet ist, mit dem sich der Gehalt an Sauerstoff in dem Inertgas messen lässt.

4. Vorrichtung nach einem der Ansprüche 1 bis 3, **dadurch gekennzeichnet, dass** sie zusätzlich mindestens eine Leitung zum Spülen des Katholytraums mit Inertgas aufweist.

5. Vorrichtung nach einem der Ansprüche 1 bis 4, **dadurch gekennzeichnet, dass** die zweite Kathode auf der Kationenaustauschermembran aufliegt.

6. Vorrichtung nach einem der Ansprüche 1 bis 5, **dadurch gekennzeichnet, dass** die Sauerstoffverzehrelektrode eine poröse hydrophobe Gasdiffusionsschicht aufweist, die metallisches Silber und ein fluoriertes Polymer enthält.

7. Vorrichtung nach einem der Ansprüche 1 bis 6, **dadurch gekennzeichnet, dass** sie mehrere parallel angeordnete Elektrolyseure umfasst, wobei jeder der Elektrolyseure mehrere Elektrolysezellen mit jeweils einem Gasraum, sowie eine gemeinsame Leitung zur Zufuhr von gasförmigem Sauerstoff in die Gasräume der Elektrolysezellen des Elektrolyseurs und eine gemeinsame Leitung zum Spülen der Gasräume der Elektrolysezellen des Elektrolyseurs mit Inertgas umfasst, und die Vorrichtung getrennte Leitungen zur Zufuhr von Sauerstoff zu den Elektrolyseuren und getrennte Leitungen zur Zufuhr von Inertgas zu den Elektrolyseuren umfasst.

8. Verfahren zum flexiblen Einsatz von Strom, **dadurch gekennzeichnet, dass** in einer Vorrichtung nach einem der Ansprüche 1 bis 7 Chlor durch Chlor-Alkali-Elektrolyse hergestellt wird, wobei
a) bei einem niedrigen Stromangebot der Sauerstoffverzehrelektrode gasförmiger Sauerstoff zugeführt wird und bei einer ersten Zellspannung an der Sauerstoffverzehrelektrode Sauerstoff reduziert wird und
b) bei einem hohen Stromangebot der Sauerstoffverzehrelektrode kein Sauerstoff zugeführt wird und bei einer zweiten Zellspannung, die höher als die erste Zellspannung ist, an der zweiten Kathode Wasserstoff erzeugt wird.

9. Verfahren nach Anspruch 8, **dadurch gekennzeichnet, dass** bei einem Wechsel von Wasserstofferzeugung bei der zweiten Zellspannung zu Sauerstoffreduktion bei der ersten Zellspannung die Zellspannung verringert wird, bis im Wesentlichen kein Strom fließt, und der Gasraum mit einem Inertgas gespült wird, bevor der Sauerstoffverzehrelektrode gasförmiger Sauerstoff zugeführt wird.

10. Verfahren nach Anspruch 8 oder 9, **dadurch gekennzeichnet, dass** bei einem Wechsel von Sauerstoffreduktion bei der ersten Zellspannung zu Wasserstofferzeugung bei der zweiten Zellspannung die Zellspannung verringert wird, bis im Wesentlichen kein Strom fließt, und der Gasraum mit einem Inertgas gespült wird, bevor an der zweiten Kathode Wasserstoff erzeugt wird.

11. Verfahren nach einem der Ansprüche 8 bis 10, umfassend die Schritte
a) Festlegen eines Schwellwerts für ein Stromangebot,
b) Bestimmen des Stromangebots,
c) Betreiben der Elektrolysezelle mit der ersten Zellspannung unter Zufuhr von gasförmigem Sauerstoff zur Sauerstoffverzehrelektrode wenn das Stromangebot unter dem Schwellwert liegt und Betreiben der Elektrolysezelle mit der zweiten Zellspannung ohne Zufuhr von Sauerstoff zur Sauerstoffverzehrelektrode wenn das Stromangebot über dem Schwellwert liegt, und
d) Wiederholen der Schritte b) und c).

12. Verfahren nach einem der Ansprüche 8 bis 11, **dadurch gekennzeichnet, dass** Stickstoff als Inertgas verwendet wird.

13. Verfahren nach einem der Ansprüche 8 bis 12, **dadurch gekennzeichnet, dass** nach einem Wechsel von Sauerstoffreduktion bei der ersten Zellspannung zu Wasserstofferzeugung bei der zweiten Zellspannung der Kathodenhalbzelle eine Wasserstoff und Inertgas enthaltende Gasmischung entnommen wird und aus dieser Gasmischung Wasserstoff durch eine Membran abgetrennt wird.

14. Verfahren nach einem der Ansprüche 8 bis 13, **dadurch gekennzeichnet, dass** die Vorrichtung mehrere Elektrolysezellen gemäß einem der Ansprüche 1 bis 6 aufweist und der Anteil der Elektrolysezellen, denen kein Sauerstoff zugeführt wird und in denen an der zweiten Kathode Wasserstoff erzeugt wird, in Abhängigkeit vom Stromangebot verändert wird.

15. Verfahren nach einem der Ansprüche 8 bis 14, **dadurch gekennzeichnet, dass** eine Prognose des erwarteten Stromangebots erstellt wird, eine Mindestdauer für den Betrieb mit der ersten und mit der zweiten Zellspannung vorgegeben wird und ein Wechsel zwischen einem Betrieb mit der ersten Zellspannung unter Zufuhr von gasförmigem Sauerstoff zu einem Betrieb mit der zweiten Zellspannung ohne Zufuhr von Sauerstoff nur vorgenommen wird, wenn die prognostizierte Dauer eines niedrigen oder eines hohen Stromangebots länger ist als die vorgegebene Mindestdauer.

## Claims

1. Device for flexible use of power, comprising an electrolysis cell for chlor-alkali electrolysis having an anode half-cell, a cathode half-cell and a cation exchange membrane that separates the anode half-cell and the cathode half-cell from one another, an anode arranged in the anode half-cell for evolution of chlorine, an oxygen-consuming electrode arranged in the cathode half-cell as the cathode, a catholyte space which is formed between the cation exchange membrane and the oxygen-consuming electrode, and through which electrolyte flows, a gas space adjoining the oxygen-consuming electrode at a surface facing away from the catholyte space, and a conduit for supply of gaseous oxygen to this gas space, **characterized in that** a second cathode for generation of hydrogen is arranged within the catholyte space and the device has at least one conduit for purging of the gas space with inert gas.

2. Device according to Claim 1, **characterized in that** the oxygen-consuming electrode and the second cathode have separate power connections.

3. Device according to Claim 1 or 2, **characterized in that** it comprises a conduit with which inert gas can be withdrawn from the gas space, and at this conduit a sensor is arranged with which the content of oxygen in the inert gas can be measured.

4. Device according to any one of Claims 1 to 3, **characterized in that** it additionally comprises at least one conduit for purging the catholyte space with inert gas.

5. Device according to any one of Claims 1 to 4, **characterized in that** the second cathode abuts the cation exchange membrane.

6. Device according to any one of Claims 1 to 5, **characterized in that** the oxygen-consuming electrode has a porous hydrophobic gas diffusion layer containing metallic silver and a fluorinated polymer.

7. Device according to any one of Claims 1 to 6, **characterized in that** it comprises a plurality of electrolysers arranged in parallel, each of the electrolysers comprising a plurality of electrolysis cells each having a gas space, and a common conduit for supply of gaseous oxygen to the gas spaces of the electrolysis cells of the electrolyser and a common conduit for purging of the gas spaces of the electrolysis cells of the electrolyser with inert gas, and the device comprises separate conduits for supply of oxygen to the electrolysers and separate conduits for supply of inert gas to the electrolysers.

8. Method for flexible use of power, **characterized in that**, in a device according to any one of Claims 1 to 7, chlorine is produced by chlor-alkali electrolysis, wherein
a) when power supply is low, the oxygen-consuming electrode is supplied with gaseous oxygen, and oxygen is reduced at the oxygen-consuming electrode at a first cell voltage, and
b) when power supply is high, the oxygen-consuming electrode is not supplied with oxygen, and hydrogen is generated at the second cathode at a second cell voltage which is higher than the first cell voltage.

9. Method according to Claim 8, **characterized in that**, when changing from hydrogen generation at the second cell voltage to oxygen reduction at the first cell voltage, the cell voltage is reduced until essentially no current flows, and the gas space is purged with an inert gas, before gaseous oxygen is supplied to the oxygen-consuming electrode.

10. Method according to Claim 8 or 9, **characterized in that**, when changing from oxygen reduction at the first cell voltage to hydrogen generation at the second cell voltage, the cell voltage is reduced until essentially no current flows, and the gas space is purged with an inert gas, before hydrogen is generated at the second cathode.

11. Method according to any one of Claims 8 to 10, comprising the steps of
a) defining a threshold value for a power supply,
b) determining the power supply,
c) operating the electrolysis cell with the first cell voltage with supply of gaseous oxygen to the oxygen-consuming electrode when the power supply is below the threshold value and operating the electrolysis cell with the second cell voltage without supply of oxygen to the oxygen-consuming electrode when the power supply is above the threshold value, and
d) repeating steps b) and c).

12. Method according to any one of Claims 8 to 11, **characterized in that** nitrogen is used as the inert gas.

13. Method according to any one of Claims 8 to 12, **characterized in that**, after a swichover from oxygen reduction at the first cell voltage to hydrogen generation at the second cell voltage, a gas mixture comprising hydrogen and inert gas is withdrawn from the cathode half-cell and hydrogen is separated from this gas mixture through a membrane.

14. Method according to any one of Claims 8 to 13, **characterized in that** the device has a plurality of electrolysis cells according to any one of Claims 1 to 6, and the proportion of the electrolysis cells to which no oxygen is supplied and in which hydrogen is generated at the second cathode is altered as a function of the power supply.

15. Method according to any one of Claims 8 to 14, **characterized in that** a prediction of the expected power supply is made, a minimum duration for operation with the first and with the second cell voltage is set, and a switchover between operation with the first cell voltage with supply of gaseous oxygen to operation with the second cell voltage without supply of oxygen is performed only when the predicted duration of a low or high power supply is longer than the minimum duration set.

## Revendications

1. Dispositif pour l'utilisation flexible d'un courant, comprenant une cellule d'électrolyse pour l'électrolyse chlore-alcali, comprenant une demi-cellule anodique, une demi-cellule cathodique et une membrane d'échange de cations séparant la demi-cellule anodique et la demi-cellule cathodique l'une de l'autre, une anode agencée dans la demi-cellule anodique pour la formation de chlore, une électrode consommant de l'oxygène agencée dans la demi-cellule cathodique en tant que cathode, une chambre de catholyte formée entre la membrane d'échange de cations et l'électrode consommant de l'oxygène et traversée par un électrolyte, une chambre de gaz adjacente à l'électrode consommant de l'oxygène sur une surface opposée à la chambre de catholyte et une conduite pour l'introduction d'oxygène gazeux dans cette chambre de gaz, **caractérisé en ce qu'**une deuxième cathode est agencée dans la chambre de catholyte pour la génération d'hydrogène et le dispositif comprend au moins une conduite pour le rinçage de la chambre de gaz avec un gaz inerte.

2. Dispositif selon la revendication 1, **caractérisé en ce que** l'électrode consommant de l'oxygène et la deuxième cathode présentent des alimentations électriques séparées l'une de l'autre.

3. Dispositif selon la revendication 1 ou 2, **caractérisé en ce qu'**il comprend une conduite avec laquelle le gaz inerte peut être déchargé de la chambre de gaz et un capteur est agencé sur cette conduite, avec lequel la teneur en oxygène dans le gaz inerte peut être mesurée.

4. Dispositif selon l'une quelconque des revendications 1 à 3, **caractérisé en ce qu'**il comprend en outre au moins une conduite pour le rinçage de la chambre de catholyte avec un gaz inerte.

5. Dispositif selon l'une quelconque des revendications 1 à 4, **caractérisé en ce que** la deuxième cathode repose sur la membrane d'échange de cations.

6. Dispositif selon l'une quelconque des revendications 1 à 5, **caractérisé en ce que** l'électrode consommant de l'oxygène comprend une couche de diffusion de gaz hydrophobe poreuse, qui contient de l'argent métallique et un polymère fluoré.

7. Dispositif selon l'une quelconque des revendications 1 à 6, **caractérisé en ce qu'**il comprend plusieurs électrolyseurs agencés en parallèle, chacun des électrolyseurs comprenant plusieurs cellules d'électrolyse contenant chacune une chambre de gaz, ainsi qu'une conduite commune pour l'introduction d'oxygène gazeux dans les chambres de gaz des cellules d'électrolyse des électrolyseurs et une conduite commune pour le rinçage des chambres de gaz des cellules d'électrolyse des électrolyseurs avec un gaz inerte, et le dispositif comprend des conduites séparées pour l'introduction d'oxygène dans les électrolyseurs et des conduites séparées pour l'introduction de gaz inerte dans les électrolyseurs.

8. Procédé d'utilisation flexible d'un courant, **caractérisé en ce que** du chlore est fabriqué dans un dispositif selon l'une quelconque des revendications 1 à 7 par électrolyse chlore-alcali,
a) dans le cas d'une faible offre d'électricité, de l'oxygène gazeux étant amené à l'électrode consommant de l'oxygène et l'oxygène étant réduit sur l'électrode consommant de l'oxygène à une première tension de cellule, et
b) dans le cas d'une offre d'électricité importante, aucun oxygène n'est amené à l'électrode consommant de l'oxygène et de l'hydrogène est généré sur la deuxième cathode à une deuxième tension de cellule, qui est supérieure à la première tension de cellule.

9. Procédé selon la revendication 8, **caractérisé en ce que** lors d'un passage de la génération d'hydrogène à la deuxième tension de cellule à la réduction d'oxygène à la première tension de cellule, la tension de cellule est réduite jusqu'à ce qu'essentiellement aucun courant de circule et la chambre de gaz est rincée avec un gaz inerte, avant que de l'oxygène gazeux ne soit amené à l'électrode consommant de l'oxygène.

10. Procédé selon la revendication 8 ou 9, **caractérisé en ce que** lors d'un passage de la réduction d'oxygène à la première tension de cellule à la génération d'hydrogène à la deuxième tension de cellule, la tension de cellule est réduite jusqu'à ce qu'essentiellement aucun courant de circule et la chambre de gaz est rincée avec un gaz inerte, avant que de l'hydrogène ne soit généré sur la deuxième cathode.

11. Procédé selon l'une quelconque des revendications 8 à 10, comprenant les étapes suivantes :
a) la fixation d'une valeur de seuil pour une offre d'électricité,
b) la détermination de l'offre d'électricité,
c) l'exploitation de la cellule d'électrolyse avec la première tension de cellule en amenant de l'oxygène gazeux à l'électrode consommant de l'oxygène lorsque l'offre d'électricité se situe en dessous la valeur de seuil et l'exploitation de la cellule d'électrolyse avec la deuxième tension de cellule sans amener de l'oxygène à l'électrode consommant de l'oxygène lorsque l'offre d'électricité se situe au-dessus de la valeur de seuil, et
d) la répétition des étapes b) et c).

12. Procédé selon l'une quelconque des revendications 8 à 11, **caractérisé en ce que** de l'azote est utilisé en tant que gaz inerte.

13. Procédé selon l'une quelconque des revendications 8 à 12, **caractérisé en ce qu'**après un passage de la réduction d'oxygène à la première tension de cellule à la génération d'hydrogène à la deuxième tension de cellule, un mélange gazeux contenant de l'hydrogène et un gaz inerte est soutiré de la demi-cellule cathodique, et l'hydrogène est séparé de ce mélange gazeux par une membrane.

14. Procédé selon l'une quelconque des revendications 8 à 13, **caractérisé en ce que** le dispositif comprend plusieurs cellules d'électrolyse selon l'une quelconque des revendications 1 à 6, et la proportion des cellules d'électrolyse dans lesquelles de l'oxygène n'est pas introduit et dans lesquelles de l'hydrogène est généré sur la deuxième cathode est modifiée en fonction de l'offre d'électricité.

15. Procédé selon l'une quelconque des revendications 8 à 14, **caractérisé en ce qu'**un pronostic de l'offre d'électricité attendue est élaboré, une durée minimale pour l'exploitation avec la première et avec la deuxième tension de cellule est prescrite et un passage d'une exploitation avec la première tension de cellule avec introduction d'oxygène gazeux à une exploitation avec la deuxième tension de cellule sans introduction d'oxygène n'est réalisé que lorsque la durée pronostiquée d'une offre d'électricité plus faible ou plus importante est plus longue que la durée minimale prescrite.
